# EUROPÄISCHE PATENTSCHRIFT

(11) **EP 1 888 283 B1**
(45) Veröffentlichungstag und Bekanntmachung des Hinweises auf die Patenterteilung: **22.06.2011**
(21) Anmeldenummer: 06722747.0
(22) Anmeldetag: 04.04.2006
(51) Int. Cl.: B23C 5/20

(54) **SCHNEIDEINSATZ**
CUTTING INSERT
INSERT

(30) Priorität: 02.06.2005 DE 102005025818; 04.08.2005 DE 102005037310
(43) Veröffentlichungstag der Anmeldung: 20.02.2008
(73) Patentinhaber: Kennametal Widia Produktions GmbH & Co. KG, 45145 Essen (DE)
(72) Erfinder: HEINLOTH, Markus, 92353 Postbauer-Heng (DE); BÄR, Jürgen, 90765 Fürth (DE); HAUSMANN, Martin, 40878 Ratingen (DE); SCHWANER, Carsten, 45470 Mülheim/Ruhr (DE)
(74) Vertreter: Vomberg, Friedhelm
(86) Internationale Anmeldenummer: PCT/DE2006/000597
(87) Internationale Veröffentlichungsnummer: WO 2006/128411

(56) Entgegenhaltungen:
- DE-A1- 19 743 971
- US-A1- 2003 165 363

## Beschreibung

Die Erfindung betrifft einen Schneideinsatz zum Einspannen in einem scheiben- oder leistenförmigen Werkzeugkörper, insbesondere zum Fräsen von Kurbelwellen, der im Wesentlichen quaderförmig ist und zwei Frontflächen, deren Abstand die Breite des Schneideinsatzes definiert, zwei als Spanfläche dienende Seitenflächen, deren Abstand die Dicke des Schneideinsatzes bestimmt, und eine obere und untere Seitenfläche besitzt, wobei zwischen den Frontflächen und der oberen sowie der unteren Seitenfläche jeweils eine konvexe Stirnfläche angeordnet ist, so dass die obere und untere Seitenfläche und die konvexe Stirnfläche jeweils mit einer Seitenfläche Schneidkanten bilden, die seitlich in Schneidecken auslaufen. Solche Schneideinsätze sind beispielsweise aus der DE 197 04 931 C1 bekannt.

Um bei der Lagerstellenbearbeitung einer Kurbelwelle eine 90°-Schulter einzuarbeiten, muss dieses Lager zunächst mit einer ersten Schneidplatte vorbearbeitet werden, bevor anschließend die Zylinderfläche mittels einer sogenannten Durchmesserplatte nachgearbeitet wird. Verwendet man für diese Bearbeitungsvorgänge zwei unterschiedliche Wendeschneidplatten mit jeweils vier Schneidkanten, ergibt sich eine relativ geringe Produktivität.

Die DE 197 04 931 C1 beschreibt einen Schneideinsatz mit einem im Wesentlichen kubischen Grundkörper, der als Wendeschneidplatte mit acht nutzbaren Schneidplatten ausgestattet ist. Dieser Schneideinsatz besitzt zwei parallel zueinander gangeordnete Ebenen und von einem Befestigungsloch durchdrungene größere Flächen und vier hieran jeweils angrenzende Seitenflächen, nämlich zwei parallel zueinander liegende stirnseitige kleine Endflächen und größere Längsflächen, die jeweils mittig entlang ihrer Längsachse einen vorstehenden und als Anlagefläche beim Einspannen des Schneideinsatzes in einen Werkzeugträger dienenden Steg aufweisen. Die größeren Flächen gehen über eine gerundete Kante in die kleinen Endflächen über, so dass sich an der Längsseite etwa viertelkreisförmig ausgebildete Schneidkanten als Grenzlinien zu den Endflächen im Eckenbereich ergeben. Die langen Schneidkanten als Grenzlinien als zwischen den größeren Flächen und der jeweils angrenzenden Längsfläche sind bogenförmig gekrümmt, so dass sich ein zur Längsmittel- und zur Quermittelebene spiegelsymmetrischer Körper ergibt. Die langen Schneidkanten mit ihren jeweiligen Enden und die gerundete Kante bilden zwischen der kleinen Endfläche und der größeren Fläche einen Winkel zwischen 70° und 90°. Trotz dieser acht Schneidkanten können mit einem solchen Schneideinsatz keine 90°-Schultern geschnitten werden, da die Nebenschneiden die Wangen der 90°-Schulter nachschneiden würden. Somit ist auch der Einsatz dieser Schneidplatten auf die Nutzung von vier Schneidkanten beschränkt.

Die DE 19743971 zeigt einen Schneideinsatz zum Einspannen in einen scheiben- oder leistenförmigen Werkzeugkörper, insbesondere zum Fräsen von Kurbelwellen, der im Wesentlichen quaderförmig ist und zwei Frontflächen, deren Abstand die Breite des Schneideinsatzes definiert, zwei als Spanflächen dienende Seitenflächen, deren Abstand die Dicke des Schneideinsatzes bestimmt, und eine obere und eine untere Seitenfläche besitzt, wobei zwischen den Frontflächen und der oberen und der unteren Seitenfläche jeweils eine konvexe Stirnfläche angeordnet ist, so dass die obere und untere Seitenfläche und die konvexe Stirnfläche jeweils mit einer Seitenfläche Schneidkanten bildet, die seitlich in Schneidecken auslaufen, wobei sich an die konvexe Stirnfläche eine einwärts ansteigende Fläche anschließt, und wobei zwischen den einwärts ansteigenden Flächen auf der Frontfläche beidseitig einer planen Auflagefläche zur Außenkante hin abfallende Abschrägungen vorgesehen sind.

Es ist Aufgabe der vorliegenden Erfindung eine Wendeschneidplatte zur Bearbeitung einer 90°-Schulter zu schaffen, die für die Durchführung aller hierzu notwendigen Zerspanungsoperationen geeignet ist und gleichzeitig eine möglichst große Anzahl an wirksamen Schneidkanten aufweist.

Diese Aufgabe wird durch den Schneideinsatz nach Anspruch 1 gelöst. Erfindungsgemäß schließt sich bei diesem Schneideinsatz an die konvexe Stirnfläche eine einwärts abfallende Fläche an, welche die Schneidecke vorstehen lässt. Ferner sind zwischen den einwärts abfallenden Flächen auf der Frontfläche beidseitig einer planen Auflagefläche zur Außenkante hin abfallende Abschrägungen vorgesehen. Die Breite und die Dicke des Schneideinsatzes weichen maximal um 20% voneinander ab, vorzugsweise weisen sie identische Längen auf. Durch die vorstehend erwähnten Maßnahmen wird erreicht, dass die Nebenschneiden der erfindungsgemäßen Schneideinsätze freigelegt sind, so dass sie an einer Wange einer Kurbelwelle nicht nachschneiden können. Da der definierte Schneideinsatz aufgrund seiner etwa gleich großen Dicke und Breite sowohl für das Bearbeiten einer 90°-Schulter als auch für die Zapfendurchmesserbearbeitung einer Kurbelwelle verwendet werden kann, ersetzt der erfindungsgemäße Schneideinsatz die üblicherweise eingesetzten zwei Typen von Wendeschneidplatten. Dies minimiert sowohl die Werkzeuglagerkosten als auch die Herstellungskosten für die Schneideinsätze und führt insgesamt wegen der größeren Anzahl der nutzbaren Schneiden zu niedrigeren Fertigungskosten. Weitere Ausführungsformen der Erfindung sind in den Unteransprüchen beschrieben.

So soll nach einer Weiterbildung der Erfindung die Befestigungsschraube, die im eingespannten Zustand eine Bohrung durchgreift, die senkrecht zu den Frontflächen liegt, kürzer sein als die Schneidkantenlänge. Mit dieser Maßnahme wird eine übermäßige Längung der Befestigungsschraube verhindert.

Vorzugsweise besitzt die Frontfläche zwischen den beiden genannten einwärts abfallenden Flächen eine ebene Anlagefläche, wobei die Anlageflächen der beiden beabstandeten Frontflächen exakt parallel zueinander liegen.

In einer konkreten Ausführungsform der vorliegenden Erfindung betragen die Neigungen der abfallenden Fläche relativ zur Auflagefläche 1 ° bis 10°, vorzugsweise 5°. Die Neigung der Abschrägungen zur Ebene der Auflagefläche liegt zwischen 15° und 30°, vorzugsweise bei 25°.

Um eine sichere Auflage zu schaffen, sind die Auflageflächen in der Frontfläche eben ausgebildet und liegen beidseitig der Bohrung zur Aufnahme der Befestigungsschraube. Die Auflageflächen und die Linien, die auf den konvexen Stirnflächen liegen und am weitesten vorstehen, liegen in einer einzigen Ebene, welche die Auflageebene bildet.

Der Spanwinkel entlang der Schneidkante wird vorzugsweise positiv gewählt und beträgt bis zu 20°, insbesondere 10° bis 15°. Zur Schneidkantenstabilisierung kann entlang der Schneidkante auch eine Fase angeordnet sein, die vorzugsweise unter einem Fasenwinkel von 0° bis -15° angeordnet ist. Der Krümmungsradius der konvexen Stirnflächen liegt nach einer Ausbildung der Erfindung zwischen 1 mm bis 1,5 mm, vorzugsweise bei 1,2 mm.

Weitere Ausführungsvarianten sowie Vorteile des Schneideinsatzes ergeben sich aus den Zeichnungen. Es zeigen
- Fig. 1 und 2: unterschiedliche Ansichten eines erfindungsgemäßen Schneideinsatzes in einer ersten Ausführungsform,
- Fig. 3: eine Draufsicht auf eine weitere Ausführungsform des Schneideinsatzes auf die Frontfläche,
- Fig.4: eine Draufsicht auf eine Seitenfläche des Schneideinsatzes nach Fig. 3,
- Fig. 5: eine Detaildarstellung B gemäß Fig. 4 und
- Fig. 6: eine Schnittdarstellung E-E gemäß Fig. 4.

Der quaderförmige Schneideinsatz besitzt gegenüberliegende Frontflächen 10 und 11, die oben und unten durch konvexe Stirnflächen 1 in eine obere und untere Seitenfläche 5 übergehen. Die Spanflächen werden durch die Seitenflächen 6 gebildet, welche die Frontflächen 10 und 11 miteinander verbinden. Diese Seitenflächen 6 werden durch die mit der oberen und unteren Fläche 5 und der konvexen Stirnfläche 1 gebildete Schneidkante 7 begrenzt, die in dem Eckenbereich 7' einen Winkel von 90° überstreicht und ein nach innen geneigte Nebenschneide besitzt, die durch die im Anschluss an die Stirnfläche 1 sich anschließende abfallende Fläche 2 gebildet wird. Diese Fläche 2 erstreckt sich über die gesamte Dicke 3 des Schneideinsatzes und bewirkt, dass die Nebenschneide freigelegt wird, so dass diese Nebenschneide beim rechtwinkligen Eintauchen des Schneidwerkzeuges in das Werkstück nicht nachschneiden kann. Die beiden Frontflächen 10 und 11 besitzen ferner auf jeder Seite eine ebene Anlagefläche 8, wobei sich diese Anlageflächen parallel gegenüber liegen. In der Anlagefläche befindet sich ein Befestigungsloch 9, in welchem eine Spannschraube 12 aufgenommen wird. Beidseitig der ebenen Anlagefläche 8 und zwischen den abfallenden Flächen 2 (oben und unten) sind Abschrägungen 13 und 14 angeordnet. Die Breite 4 des Schneideinsatzes und die Dicke 3 sind nahezu identische lang. Die Befestigungsschraube 12 soll nicht länger sein als der geradlinige Anteil der Schneidkante 7, um eine übermäßige Längung der Schraube zu verhindern Der Schneideinsatz wird so in den Werkzeugträger eingebaut, dass er exakt unter einem Winkel von 90° in das Werkzeugstück eintaucht und eine exakte 90° Schulter schneidet. Vorzugsweise kann der Schneideinsatz überall bei der Kurbelwellenbearbeitung eingesetzt werden, wo der Ölbund so hoch ist, dass die gegenüberliegende Schneide nicht nachschneidet bzw. freiliegt.

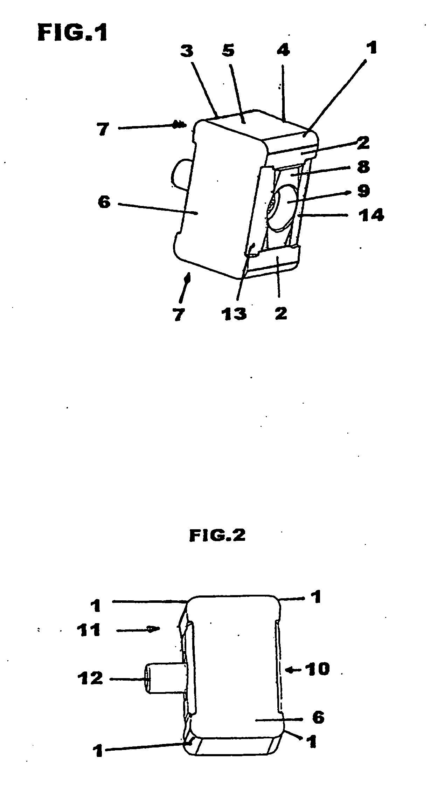

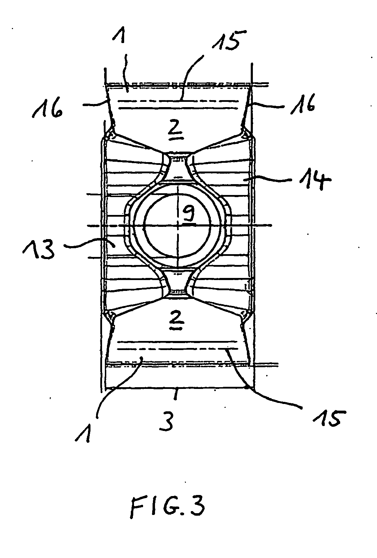

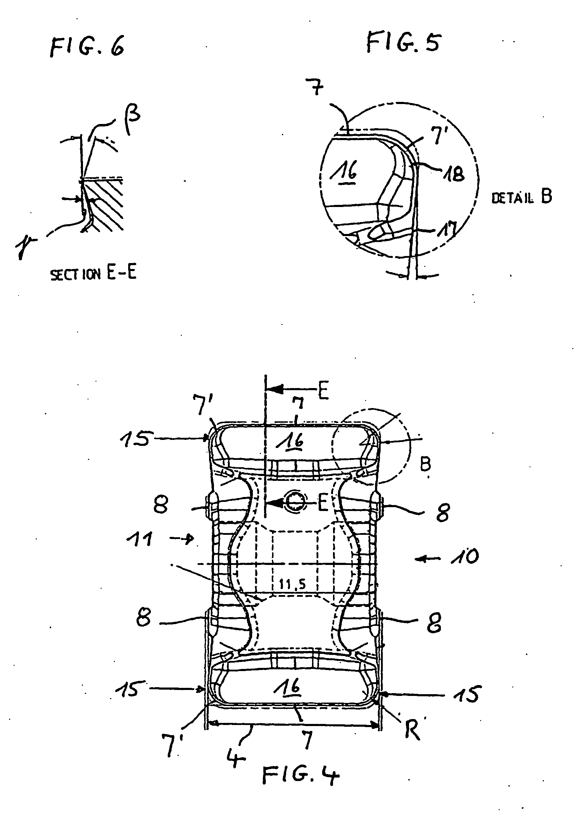

In einer weiteren Ausführungsform der Erfindung gemäß Fig. 3 und 4, sind gleiche Teile mit desselben Bezugszeichen wie beim Schneideinsatz nach Fig. 1 und 2 versehen. Auch der in Fig. 3 bis 6 dargestellte Schneideinsatz ist im Wesentlichen quaderförmig, wobei die aus Fig. 4 ersichtliche Breite 4 des Schneideinsatzes, die im Wesentlichen durch den Abstand der Schneidkantenecken 7' bestimmt wird, etwa um 20% größer als die Dicke 3 des Schneideinsatzes ist. An das Befestigungsloch 9 schließen sich jeweils beidseitig, in Fig. 3 oberhalb und unterhalb zwei kleine etwa trapezförmig gestaltete Auflageflächen 8 an, die mit Linien 15, wie aus Fig. 4 ersichtlich, in einer Ebene liegen. Die Linie 15, die etwa den Übergang der abfallenden Fläche 2 zu der gekrümmten Fläche 1 ausmacht, bildet wie aus Fig. 4 zu erkennen, in einer einzigen Ebene mit Flächen 8 liegend eine sichere Auflage. Wie aus Fig. 5 ersichtlich, beträgt der Winkel α, um den die Nebenschneide 17 gegenüber einer Vertikalen zur Schneidkante 7 nach innen geneigt ist, 5°. Entlang der Schneidkante erstreckt sich eine Fase 18 mit einem Winkel β von (-) 15° (siehe Fig. 6). Der Spanwinkel y liegt bei 12° bis 15°.

Die Spanflächen 16 können mit Spanformelementen versehen sein, wobei auf die nach dem Stand der Technik bekannten Ausformungen in Form von Erhebung oder Absenkungen zurückgegriffen werden kann. Die Spanformelemente sollen insbesondere zum Abheben des Spans sowie zum Spanbruch dienen.

Der erfindungsgemäße Schneideinsatz kann aus einem Hartmetall oder einem Cermet-Körper bestehen, der unbeschichtet oder mit einer ein- oder mehrlagigen Beschichtung versehen ist. Die Materialwahl des Schneideinsatzes sowie der Beschichtung richtet sich im Wesentlichen nach den zu zerspanenden Werkstoff, der ein Nichteisenmetall, Eisen oder ein Gusswerkstoff sein kann, z. B. eine Kurbelwelle. Weiterhin wird die Materialwahl durch die Verfahrensparameter bestimmt, wobei beim Kurbelwellefräsen, das sowohl als Innen- als auch als Außenfräsen durchgeführt werden kann, vorzugsweise hohe Schnittgeschwindigkeiten von mehr als 160 m/min bis 300 m/min angestrebt werden.

## Patentansprüche

1. Schneideinsatz zum Einspannen in einen scheiben- oder leistenförmigen Werkzeugkörper, insbesondere zum Fräsen von Kurbelwellen, der im Wesentlichen quaderförmig ist und zwei Frontflächen (10, 11), deren Abstand die Breite (4) des Schneideinsatzes definiert, zwei als Spanflächen (6) dienende Seitenflächen, deren Abstand die Dicke (3) des Schneideinsatzes bestimmt, und eine obere und eine untere Seitenfläche (5) besitzt, wobei zwischen den Frontflächen (10, 11) und der oberen und der unteren Seitenfläche (5) jeweils eine konvexe Stirnfläche (1) angeordnet ist, so dass die obere und untere Seitenfläche (5) und die konvexe Stirnfläche jeweils mit einer Seitenfläche (6) Schneidkanten (7) bildet, die seitlich in Schneidecken (7') auslaufen, **dadurch gekennzeichnet, dass** sich an die konvexe Stirnfläche (1) eine einwärts abfallende Fläche (2) anschließt, welche die Schneidecke (7') vorstehen lässt, dass zwischen den einwärts abfallenden Flächen (2) auf der Frontfläche (10, 11) beidseitig einer planen Auflagefläche (8) zur Außenkante hin abfallende Abschrägungen (13, 14) vorgesehen sind, und dass die Breite und die Dicke des Schneideinsatzes maximal um 20% voneinander abweichen, vorzugsweise identische Längen aufweisen.

2. Schneideinsatz nach Anspruch 1, **dadurch gekennzeichnet, dass** die Frontfläche zwischen zwei einwärts abfallenden Flächen (2) eine ebene Anlagefläche (8) aufweist, wobei die Anlageflächen (8) der beiden Frontflächen (10, 11) exakt parallel zueinander liegen.

3. Schneideinsatz nach Anspruch 2, **dadurch gekennzeichnet, dass** die Neigung der abfallenden Fläche (2) relativ zur Auflagefläche (8) 1° bis 10°, vorzugsweise 5° beträgt.

4. Schneideinsatz nach einem der Ansprüche 1 bis 3, **dadurch gekennzeichnet, dass** die Neigung der Abschrägung (13, 14) zur Ebene der Auflagefläche (8) 15° bis 30°, vorzugsweise 25° beträgt.

5. Schneideinsatz nach einem der Ansprüche 1 bis 4, **dadurch gekennzeichnet, dass** die Auflageflächen (8) in einer Frontfläche ebene Flächenstücke sind, die beidseitig der Bohrung (9) zur Aufnahme der Befestigungsschraube (12) angeordnet sind und die mit den Linien auf den konvexen Stirnflächen, die am weitesten hervorstehen, in einer Ebene liegen.

6. Schneideinsatz nach einem der Ansprüche 1 bis 5, **dadurch gekennzeichnet, dass** der Spanwinkel (γ) entlang der Schneidkante (7) positiv ist und bis zu 20°, vorzugsweise 10° bis 15° beträgt.

7. Schneideinsatz nach einem der Ansprüche 1 bis 6, **dadurch gekennzeichnet, dass** entlang der Schneidkante (7) eine Fase (18) angeordnet ist, vorzugsweise unter einem Fasenwinkel (β) von 0° bis -15°.

8. Schneideinsatz nach einem der Ansprüche 1 bis 7, **dadurch gekennzeichnet, dass** der Krümmungsradius (R) der konvexen Stirnflächen (1) 1 mm bis 1,5 mm, vorzugsweise 1,2 mm beträgt.

## Claims

1. Cutting insert for clamping into a tool body shaped as a disk or bar, in particular for milling crankshafts, that is substantially parallelepipedal and has two front faces (10, 11) separated by a spacing defining a width (4) of the cutting insert, two side faces that act as cutting surfaces (6) separated by a spacing that determines a thickness (3) of the cutting insert, and one upper and one lower side face (5), where one convex edge surface (1) being formed between each of the front faces (10, 11) and the upper side face (5) and the lower side face (5), such that the upper and lower side faces (5) and the convex edge surface (1) each form with a side face (6) cutting edges (7) that end laterally in cutting corners (7'), **characterized in that** a surface (2) tapering towards centre abuts the convex edge surface (1) which allows the respective cutting corner (7') to project, **in that** bevel faces (13, 14) angled to the outer edge are provided between the surfaces (2) tapering towards centre on the front faces (10, 11) on both sides of a planar support surface (8), and **in that** a width and a thickness of the cutting insert vary from each other by no more than 20%, preferably are identical in length.

2. Cutting insert according to claim 1, **characterized in that** between two surfaces (2) tapering towards centre the front face preferably has a flat support surface (8), the support surfaces (8) of the two front faces (10, 11) being exactly parallel to one another.

3. Cutting insert according to claim 2, **characterized in that** a slope of the angled surface (2) is 1° to 10° relative to the respective support surface (8), preferably 5°.

4. Cutting insert according to one of the claims 1 through 3, **characterized in that** the slope of the bevel face (13, 14) to the plane of the support surface (8) is 15° to 30°, preferably 25°.

5. Cutting insert according to one of the claims 1 through 4, **characterized in that** the support surfaces (8) on a front face are flat surfaces that flank the respective bore (9) for receiving a mounting bolt (12) and that are coplanar with lines on and projecting past the respective convex edge surfaces.

6. Cutting insert according to one of the claims 1 through 5, **characterized in that** the cutting angle (γ) along the cutting edge (7) is positive and at most 20°, preferably 10° to 15°.

7. Cutting insert according to one of the claims 1 through 6, **characterized in that** the chamfer (18) preferably set at a chamfer angle (β) of 0° to -15° is formed along the cutting edge (7).

8. Cutting insert according to one of the claims 1 through 7, **characterized in that** a radius of curvature (R) for the convex edge surfaces (1) is 1 mm to 1,5 mm, preferably 1,2 mm.

## Revendications

1. Insert de coupe destiné à être serré dans un corps d'outil en forme de disque ou de barrette, en particulier pour le fraisage de vilebrequins, qui présente une forme pour l'essentiel parallélépipédique et qui comprend deux faces frontales (10, 11) dont la distance l'une par rapport à l'autre définit la largeur (4) dudit insert de coupe, deux faces latérales faisant fonction de faces de coupe (6) dont la distance l'une par rapport à l'autre détermine l'épaisseur (3) de l'insert de coupe, ainsi que des faces latérales supérieure et inférieure (5), entre les faces frontales (10, 11) et les faces latérales supérieure et inférieure (5) étant disposée respectivement une face frontale convexe (1) de sorte que les faces latérales supérieure et inférieure (5) et la face frontale convexe forment, respectivement avec une face latérale (6), des arêtes tranchantes (7) qui se terminent latéralement dans des coins de coupe (7'), **caractérisé par le fait que** ladite face frontale convexe (1) est suivie d'une face allant en pente vers l'intérieur (2) qui provoque que le coin de coupe (7') est en saillie, que des biseaux (13, 14) allant en pente vers le bord extérieur sont prévus entre lesdites faces allant en pente vers l'intérieur (2), sur la face frontale (10, 11), de part et d'autre d'une surface d'appui plane (8), et que la largeur et l'épaisseur de l'insert de coupe diffèrent l'une de l'autre de 20 % au maximum, de préférence présentent des longueurs identiques.

2. Insert de coupe selon la revendication 1, **caractérisé par le fait que** la face frontale entre deux faces allant en pente vers l'intérieur (2) présente une surface d'appui plane (8), les surfaces d'appui (8) des deux faces frontales (10, 11) s'étendant exactement parallèlement entre elles.

3. Insert de coupe selon la revendication 2, **caractérisé par le fait que** l'inclinaison de la face allant en pente (2) par rapport à ladite surface d'appui (8) est comprise entre 1° et 10°, de préférence de 5°.

4. Insert de coupe selon l'une quelconque des revendications 1 à 3, **caractérisé par le fait que** l'inclinaison du biseau (13, 14) par rapport au plan de la surface d'appui (8) est comprise entre 15° et 30°, de préférence de 25°.

5. Insert de coupe selon l'une quelconque des revendications 1 à 4, **caractérisé par le fait que** les surfaces d'appui (8) dans une face frontale sont des portions de surface planes qui sont disposées de part et d'autre du trou (9) de réception de la vis de fixation (12) et qui sont situées dans un même plan avec les lignes sur les faces frontales convexes qui sont le plus en saillie.

6. Insert de coupe selon l'une quelconque des revendications 1 à 5, **caractérisé par le fait que** l'angle de coupe (γ) le long de l'arête tranchante (7) est positif et peut aller jusqu'à 20°, de préférence il est compris entre 10° et 15°.

7. Insert de coupe selon l'une quelconque des revendications 1 à 6, **caractérisé par le fait qu'**un chanfrein (18), s'étendant de préférence à un angle de chanfrein (β) compris entre 0° et -15°, est disposé le long de l'arête tranchante (7).

8. Insert de coupe selon l'une quelconque des revendications 1 à 7, **caractérisé par le fait que** le rayon de courbure (R) des faces frontales convexes (1) est compris entre 1 mm et 1,5 mm, de préférence il est de 1,2 mm.
